# EUROPÄISCHE PATENTSCHRIFT

(11) **EP 4 371 393 B1**
(45) Veröffentlichungstag und Bekanntmachung des Hinweises auf die Patenterteilung: **18.03.2026**
(21) Anmeldenummer: 23197917.0
(22) Anmeldetag: 18.09.2023
(51) Int. Cl.: A01D 41/14, A01D 41/127, A01D 69/03

(54) **SELBSTFAHRENDE ERNTEMASCHINE**
SELF-PROPELLED HARVESTER
MOISSONNEUSE AUTOMOTRICE

(30) Priorität: 16.11.2022 DE 102022130290
(43) Veröffentlichungstag der Anmeldung: 22.05.2024
(73) Patentinhaber: CLAAS Selbstfahrende Erntemaschinen GmbH, 33428 Harsewinkel (DE)
(72) Erfinder: Rohde-Fölling, Marcel, 33428 Harsewinkel (DE); König, Christian, 88094 Oberteuringen (DE); Fischer, Josef, 88400 Mettenberg (DE); Butscher, Martin, 88273 Blitzenreute (DE)
(74) Vertreter: CLAAS Gruppe

(56) Entgegenhaltungen:
- EP-A1- 2 636 297
- EP-B1- 2 312 928
- DE-A1- 102014 219 205
- DE-A1- 102017 214 097
- DE-A1- 19 632 977
- US-A1- 2021 337 735
- US-B2- 10 791 673

## Beschreibung

Die vorliegende Erfindung betrifft eine selbstfahrende Erntemaschine, insbesondere Feldhäcksler, gemäß dem Oberbegriff des Anspruches 1 (US 2021/337735).

Eine selbstfahrende Erntemaschine der eingangs genannten Art ist aus der DE 10 2020 111 993 A1 bekannt. Dort ist eine selbstfahrende Erntemaschine, umfassend einen Antriebsmotor sowie einen von dem Antriebsmotor angetriebenen Vorsatzantrieb, welcher zumindest eine Hydraulikpumpe aufweist, die zum Antreiben eines Hydraulikmotors zum Antreiben eines an einer Einzugsvorrichtung der Erntemaschine angeordneten Vorsatzgerätes eingerichtet ist, beschrieben. Selbstfahrende Erntemaschine, insbesondere Feldhäcksler, werden mit unterschiedlichen Vorsatzgeräten betrieben, welche sich unter anderem hinsichtlich ihres maximal zulässigen Betriebsdrehmoments voneinander unterschieden. Weitere Unterschiede zwischen verschiedenen Arten von Vorsatzgeräten können das Betreiben mit konstanter oder variabler Drehzahl und/oder ihre Antriebsdrehrichtung sein.

Da die verschiedenen Arten von Vorsatzgeräten mit unterschiedlichen maximal zulässigen Drehmomenten zu betreiben sind, ist es erforderlich und üblich, jedes Vorsatzgerät mit seiner eigenen Überlastkupplung sowie einem Getriebe zum Begrenzen und Einstellen des zulässigen Drehmoments und der erforderlichen Drehzahl auszustatten.

Der Erfindung liegt somit die Aufgabe zugrunde, eine selbstfahrende Erntemaschine der eingangs genannten Art weiterzubilden, welche einen auf die unterschiedlichen Erfordernisse verschiedener Arten von Vorsatzgeräten abgestimmten Betrieb ermöglicht.

Diese Aufgabe wird erfindungsgemäß durch eine selbstfahrende Erntemaschine mit den Merkmalen des Anspruches 1 gelöst. Vorteilhafte Weiterbildungen sind Gegenstand der hiervon abhängigen Ansprüche.

Die vorliegende Erfindung wird nachstehend anhand eines in den Zeichnungen dargestellten Ausführungsbeispieles näher erläutert.

Es zeigen:
- Fig. 1: eine schematische Ansicht einer selbstfahrenden Erntemaschine mit Vorsatzgerät;
- Fig. 2: exemplarisch und schematisch eine perspektivische Ansicht eines Antriebssystems des Feldhäckslers;
- Fig. 3: exemplarisch ein vereinfachtes Schaltbild eines Hydraulikreislaufs eines dem Antrieb des Vorsatzgerätes dienenden Antriebsstrangs; und
- Fig. 4: ein Schwenkwinkel-Drehzahldiagramm.

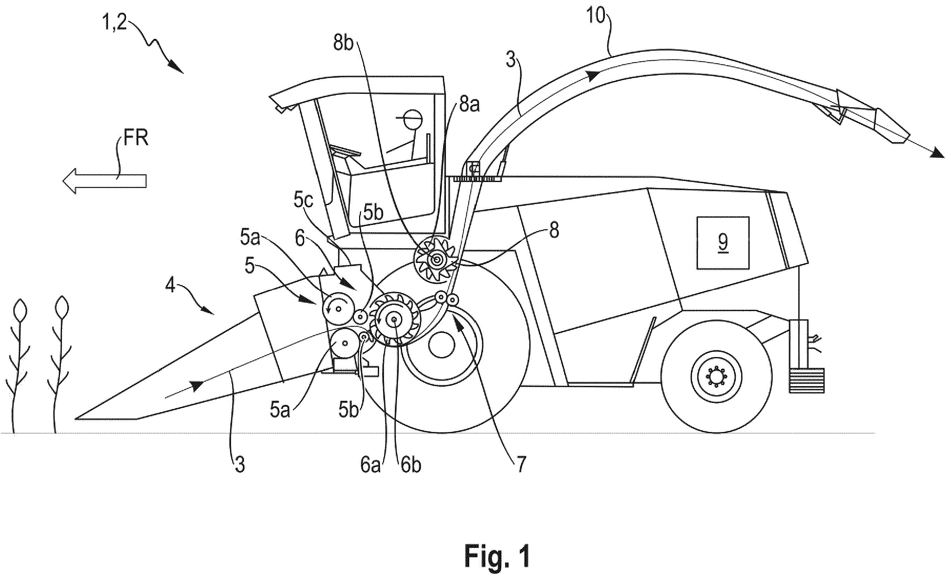

In Fig. 1 ist eine schematische Ansicht einer als Feldhäcksler 2 ausgeführten selbstfahrenden Erntemaschine 1 dargestellt. Die Erntemaschine 1 erntet beziehungsweise nimmt mittels eines Vorsatzgerätes 4 Erntegut vom Feld auf, um anschließend das aufgenommene Erntegut in Form eines Erntegutstroms 3 (in Fig. 1 als mit Pfeilen versehene Linie angedeutet) nachgeordneten Arbeitsorganen, die als Bearbeitungs- und Förderorgane der Erntemaschine 1 ausgeführt sind, zuzuführen und mittels einer Überladeeinrichtung in einen - nicht dargestellten - Ladebehälter abzuwerfen. Die Bearbeitungs- und Förderorgane der als Feldhäcksler 2 ausgeführten Erntemaschine 1 umfassen unter anderem eine Einzugsvorrichtung 5, eine Häckselvorrichtung 6, eine optionale Konditioniereinrichtung 7 sowie einen Auswurfbeschleuniger 8. Mit dem Pfeil FR ist die Fahrtrichtung bezeichnet.

Die Einzugsvorrichtung 5 besteht aus mehreren in einem Einzugsgehäuse 5c hintereinander angeordneten angetriebenen Walzenpaaren 5a, 5b. Das Vorsatzgerät 4 ist an die Einzugsvorrichtung 5 ankoppelbar. Die Häckselvorrichtung 6 umfasst eine rotierende, mit Messern ausgestatteten Messertrommel 6a mittels der das aufgenommene Erntegut in Zusammenwirkung mit einer Gegenschneide zerkleinert wird. Die Messertrommel 6a ist auf einer angetriebenen Messertrommelwelle 6b angeordnet. Der Häckselvorrichtung 6 ist in einem Förderschacht in Gutstromförderrichtung nachgelagert die optionale Konditioniereinrichtung 7 angeordnet, die bei Bedarf aus dem Erntegutstrom 3 entfernbar ist. Der Konditioniereinrichtung 7 im Förderschacht ist in Gutstromförderrichtung der Auswurfbeschleuniger 8 nachgelagert, welcher das Erntegut mittels rotierender Wurfpaddel für den sicheren Auswurf durch die als Auswurfkrümmer ausgeführte Überladeeinrichtung 10 beschleunigt. Der Auswurfbeschleuniger 8 umfasst auf einer Welle 8b drehfest angeordnete Förderelemente 8a. Im rückwärtigen Bereich des Feldhäckslers 2 ist ein als Verbrennungsmotor ausgeführter Antriebsmotor 9 als Hauptantriebsaggregat angeordnet.

Als an die Einzugsvorrichtung 5 ankoppelbare Vorsatzgerät 4 kommen unterschiedliche Arten von Vorsatzgeräten zum Einsatz, die in Abhängigkeit von der zu verarbeitenden Erntegutart ausgewählt werden. Beispielsweise wird zur Aufnahme von in Schwaden abgelegtem Erntegut eine so genannte Pick-up am Feldhäcksler 2 verwendet. Für das Ernten von Ganzpflanzen kommt hingegen ein Scheibenmähwerk zum Einsatz. Beim Ernten von Mais wird ein reihenunabhängig arbeitendes Maisgebiss oder ein reihenabhängig arbeitender Maispflücker an die Einzugsvorrichtung 5 des Feldhäckslers 2 angekoppelt.

Die vorgenannten, nicht abschließend aufgezählten, Arten von Vorsatzgeräten 4 unterscheiden sich hinsichtlich ihres Antriebes durch unterschiedliche Betriebsspezifikationen. So bedürfen beispielsweise das Maisgebiss oder die Pick-up einer variablen Antriebsdrehzahl, während das Scheibenmähwerk mit einer konstanten Antriebsdrehzahl arbeitet. Des Weiteren ist die Leistungsaufnahme des Scheibenmähwerkes höher als die der Pick-up oder des Maisgebisses. Entsprechend variieren die Anforderungen an einen hierfür vorgesehenen Antrieb.

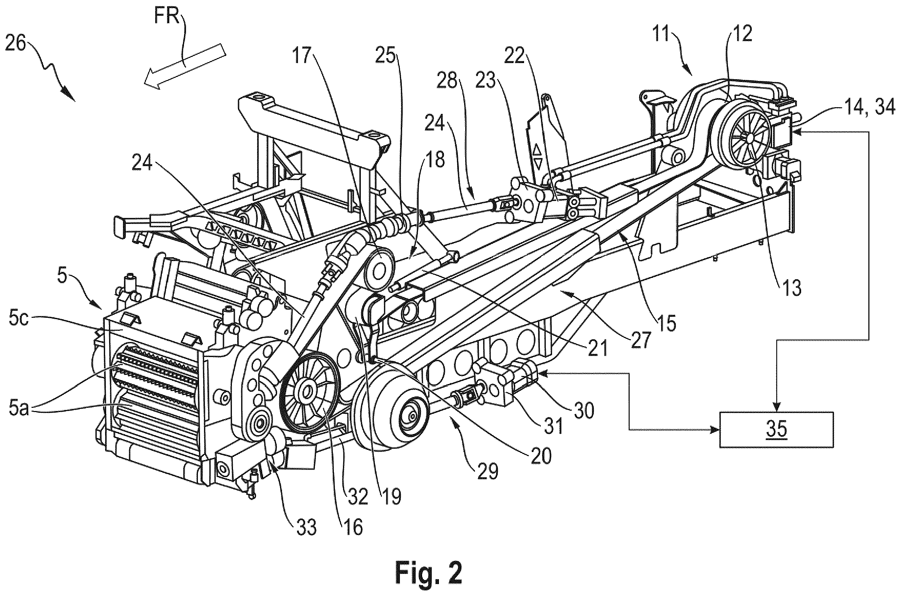

In Fig. 2 ist exemplarisch und schematisch eine perspektivische Ansicht eines Antriebssystems 26 des Feldhäckslers 2 dargestellt. Die schematische Darstellung zeigt insbesondere die Komponenten des Antriebssystems 26, welche der Kraftübertragung zu dem angebauten Vorsatzgerät 4 sowie der Einzugsvorrichtung 5 dienen.

Der Antriebsmotor 9 treibt über eine - nicht dargestellte - Motorwelle ein auf der linken Maschinenseite angeordnetes Verteilergetriebe 11 an. Das Verteilergetriebe 11 umfasst eine auf einer ersten Antriebswelle angeordnete Abtriebsriemenscheibe 12, welche durch eine hydraulisch betätigbare Kupplung 13 mit der Motorwelle des Antriebsmotors 9 schaltbar verbunden ist. Weiterhin ist an einer zweiten Antriebswelle des Verteilergetriebes 11 zumindest eine Hydraulikpumpe 14 unmittelbar an das Verteilergetriebe 11 angeschlossen.

Durch die Abtriebsriemenscheibe 12 wird mittels eines Hauptantriebsriemens 15 zumindest eine endseitig auf der Messertrommelwelle 6b angeordnete Hauptriemenscheibe 16 angetrieben. Der Hauptantriebsriemen 15 treibt über eine an einer Welle angeordnete Riemenscheibe 17 den Auswurfbeschleuniger 8 an. Die Oberseite des Hauptantriebsriemens 15 wird durch eine Spannvorrichtung 18, die eine um eine Achse 20 schwenkbare Spannrolle 19 sowie einen Hydraulikzylinder 21 umfasst, mit einer einstellbaren Spannung beaufschlagt. Die Abtriebsriemenscheibe 12, der Hauptantriebsriemen 15 und die Hauptriemenscheibe 16 bilden einen Hauptantriebsstrang 27 zum Antreiben der Messertrommel 6a, der Konditioniereinrichtung 7 sowie des Auswurfbeschleunigers 8.

Weiterhin ist ein Hydraulikmotor 22 vorgesehen, welcher oberhalb des Hauptantriebsriemens 15 angeordnet ist. Der Hydraulikmotor 22 wird von der zumindest einen Hydraulikpumpe 14 angetrieben. Eine Antriebswelle des Hydraulikmotors 22 treibt ein Getriebe 23 an, welches über Gelenkwellen 24 mit der anzutreibenden Einzugsvorrichtung 5 verbunden ist. Zwischen den Gelenkwellen 24 kann zusätzlich ein weiteres Getriebe 25 angeordnet sein. Die Hydraulikpumpe 14, der Hydraulikmotor 22 sowie das sich daran anschließende Getriebe 23 und die Gelenkwellen 24 bilden einen separaten Antriebsstrang 28 zum Antreiben der Einzugsvorrichtung 5.

Zum Antreiben des Vorsatzgerätes 4 ist ein weiterer separater Antriebsstrang, als Vorsatzantrieb 29 bezeichnet, vorgesehen. Der Vorsatzantrieb 29 kann unterhalb des Haupantriebstriemens 15 angeordnet sein. Der Vorsatzantrieb 29 umfasst zumindest eine Hydraulikpumpe 34, die einen Hydraulikmotor 30 antreibt. Weiterhin kann der Vorsatzantrieb 29 ein an eine Abtriebswelle des Hydraulikmotors 30 angeschlossenes Getriebe 31 aufweisen sowie zumindest eine Gelenkwelle 32, welche mit einer Kuppeleinrichtung 33 für den Antrieb des an der Einzugsvorrichtung 5 angeordneten Vorsatzgerätes 4 trieblich verbunden ist. Die Kuppeleinrichtung 33 ist hier und vorzugsweise als eine Schnellkuppeleinrichtung ausgeführt. Der Hydraulikmotor 30 wird von der zumindest einen Hydraulikpumpe 34 gespeist. Die zumindest eine Hydraulikpumpe 34 des Vorsatzantriebes 29 ist zum Antreiben ebenfalls, insbesondere unmittelbar, an das Verteilergetriebe 11 angeschlossen.

Der Antriebsstrang 28 zum Antreiben der Einzugsvorrichtung 5 und der Vorsatzantrieb 29 zum Antreiben des Vorsatzgerätes 4 sind unabhängig voneinander betreibbar und ansteuerbar.

Der Hydraulikmotor 30 ist als Verstellmotor ausgeführt. Die Hydraulikpumpe 34 ist als Verstellpumpe ausgeführt. Zur Ansteuerung des Hydraulikmotors 30 und der diesen antreibenden Hydraulikpumpe 34 ist eine Steuerungsvorrichtung 35 vorgesehen. Die Steuerungsvorrichtung 35 ist dazu eingerichtet, ein vom Hydraulikmotor 30 aufgenommenes maximales Schluckvolumen vorzugeben. Die Vorgabe des durch den Hydraulikmotor 30 aufgenommenen maximalen Schluckvolumens erfolgt in Abhängigkeit von der Art des Vorsatzgerätes 4, welches von der Einzugsvorrichtung 5 aufgenommen ist. Somit lässt sich für unterschiedliche Arten von am Feldhäcksler 2 zum Einsatz kommenden Vorsatzgeräten 4, beispielsweise Pick-up, Maisgebiss oder Direktschneidwerk, das an der Kuppeleinrichtung 33 bereitgestellte maximale Drehmoment vorsatzgerätespezifisch einstellen bzw. begrenzen.

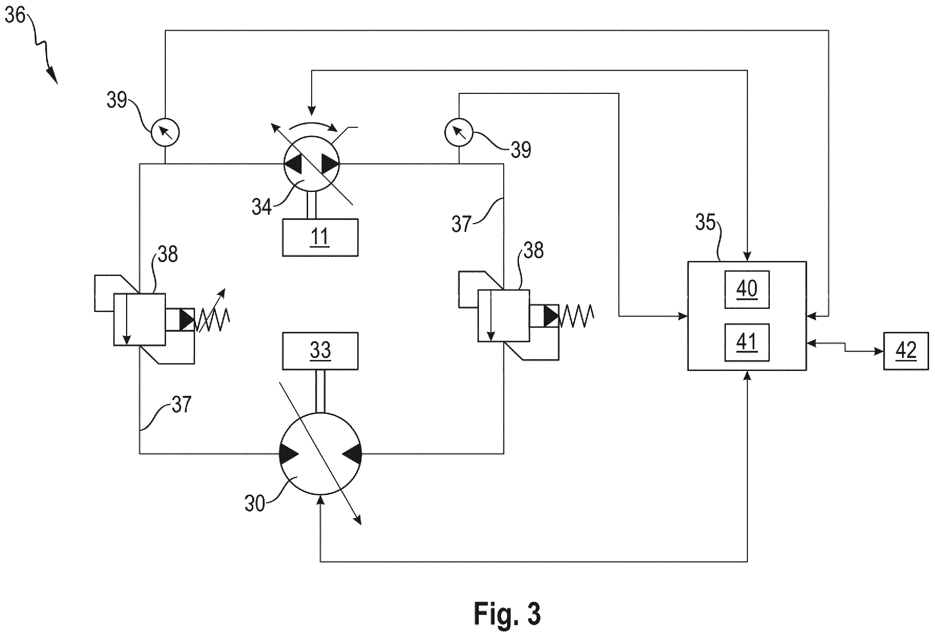

Die Darstellung in Fig. 3 zeigt exemplarisch ein stark vereinfachtes Schaltbild eines Hydraulikreislaufs 36 des dem Antrieb des Vorsatzgerätes 4 dienenden Vorsatzantriebs 29. Der Hydraulikmotor 30 und die Hydraulikpumpe 34 sind in dem geschlossen ausgeführten Hydraulikkreislauf 36 angeordnet. In beiden Hydraulikleitungen 37, welche den Hydraulikmotor 30 und die Hydraulikpumpe 34 miteinander fluidleitend verbinden, können Druckbegrenzungsventile 38 angeordnet sein.

Die vorsatzgerätespezifische Vorgabe des Schluckvolumens des Hydraulikmotors 30 durch die Steuerungsvorrichtung 35 ermöglicht es, für das Einziehen des Erntegutes durch das Vorsatzgerät 4 ein anderes Drehmoment einzustellen als für das Reversieren. Die Steuerungsvorrichtung 35 ist dazu eingerichtet, vorsatzgerätespezifisch das Schluckvolumen beim Einziehen auf einen ersten Wert einzustellen bzw. zu begrenzen und beim Reversieren auf einen zweiten Wert, der vom ersten Wert abweichen kann.

Die Steuerungsvorrichtung 35 umfasst eine Recheneinheit 40, eine Speichereinheit 41 sowie eine Bedien- und Anzeigeeinheit 42. Die Recheneinheit 40 ist dazu eingerichtet, in der Speichereinheit 41 hinterlegte Informationen zu verarbeiten. Die Bedien- und Anzeigeeinheit ist zur Eingabe und/oder manuellen oder automatisierten Auswahl des jeweiligen an der Einzugsvorrichtung 5 angeordneten Vorsatzgerätes 4 eingerichtet. In der Speichereinheit 41 können für die verschiedenen Arten und Modelle von Vorsatzgeräten 4 vorsatzgerätespezifische Parametersätze hinterlegt sein. Die vorsatzgerätespezifischen Parametersätze beinhalten unter anderem Maximalwerte für Drehmomente im Einziehbetrieb und im Reversierbetrieb der verschiedenen Vorsatzgerätearten und -modelle.

Alternativ zur manuellen Eingabe oder Auswahl des an der Einzugsvorrichtung 5 angeordneten Vorsatzgerätes 4 ist es denkbar, dass eine automatische Vorsatzgeräteerkennung vorgesehen ist, um Art und Typ des angekoppelten Vorsatzgerätes 4 zu bestimmen.

Der jeweilige für das angebaute Vorsatzgerät 4 spezifische Parametersatz wird entsprechend der Eingabe oder der Auswahl durch eine Bedienperson zur Ansteuerung des Hydraulikmotors 30 herangezogen, um Schluckvolumen oder Schwenkwinkel SW des Hydraulikmotors 30 zur Begrenzung des auf das Vorsatzgerät 4 zu übertragenden Drehmoments einzustellen.

Weiterhin kann die Bedien- und Anzeigeeinheit 42 zur manuellen Eingabe von Maximalwerten für Drehmomente im Einziehbetrieb und im Reversierbetrieb des Vorsatzgerätes 4 eingerichtet sein.

Die Steuerungsvorrichtung 35 ist zur Begrenzung des auf das Vorsatzgerät 4 zu übertragenden Drehmoments dazu eingerichtet, einen Steuerstrom zur Einstellung des Schwenkwinkels SW des Hydraulikmotors 30 einzustellen und zu überwachen. Hierzu wird der Steuerstrom durch eine Sensoranordnung erfasst und die von der Sensoranordnung generierten Messsignale an die Steuerungsvorrichtung 35 zur Auswertung übertragen.

Die Druckbegrenzungsventile 38 sind der Hydraulikpumpe 34 nachgeordnet angeordnet. Die beiden Druckbegrenzungsventile 38 sind baugleich ausgeführt, so dass das maximale vorsatzgerätespezifische Drehmoment, welches an der Kuppeleinrichtung 33 bereitgestellt wird, drehrichtungsunabhängig gleich ist. Baugleich heißt in diesem Fall, dass die beiden Druckbegrenzungsventile 38 identische Spezifikationen aufweisen. Den Hydraulikleitungen 37 ist jeweils ein Drucksensor 39 zugeordnet, welche von diesen generierte Messsignale an die Steuerungsvorrichtung 35 zur Auswertung übertragen.

Die Anordnung der beiden baugleichen Druckbegrenzungsventile 38 im Hydraulikkreis 36 ermöglicht es zudem, den Hydraulikmotor 30 in beide Drehrichtungen, d.h. im Einziehbetrieb und im Reversierbetrieb, bei voller Leistungsfähigkeit zu betreiben.

Die Steuerungsvorrichtung 35 ist weiter dazu eingerichtet, im Einziehbetrieb und im Reversierbetrieb für das Schluckvolumen oder den Schwenkwinkel SW gleiche Einstellwerte oder voneinander abweichende Einstellwerte vorzugeben und einzustellen. In Verbindung mit den beiden baugleichen Druckbegrenzungsventilen 38 ermöglicht dies eine Abstimmung an die Anforderungen der unterschiedlichen Vorsatzgeräte 4, wodurch eine Überlastung der Komponenten des jeweiligen Vorsatzgerätes 4 sowie des Vorsatzantriebs 29 vermieden werden.

Der Vorsatzantrieb 29 ist zum linksdrehenden und zum rechtsdrehenden Antreiben des Vorsatzgerätes 4 in einem Einziehbetrieb vorgesehen und eingerichtet.

Die Drehrichtung an der Kuppeleinrichtung 33 kann durch eine invertierte Ansteuerung der Hydraulikpumpe 34 richtungsvertauscht werden. Die invertierte Ansteuerung der Hydraulikpumpe 34 erfolgt vorzugsweise ebenfalls durch die Steuerungsvorrichtung 35. Bei der invertierten Ansteuerung steuert die Steuerungseinrichtung 35 den Schwenkwinkel der Hydraulikpumpe 34 derart an, sodass sich die Drehrichtung des Vorsatzantriebs 29 von linksdrehend zu rechtsdrehend oder umgekehrt ändert. In beide Drehrichtungen sind die gleichen maximalen Drehzahlen einstellbar, somit sind sowohl Vorsatzgeräte 4 mit einer linksseitigen Drehrichtung für den Einziehbetrieb als auch Vorsatzgeräte 4 mit einer rechtsseitigen Drehrichtung für den Einziehbetrieb ohne zusätzliche Wechselgetriebe oder zumindest mit einer verringerten Anzahl von Wechselgetrieben mit dem Vorsatzantrieb 29 der Erntemaschine 1 koppelbar.

In Verbindung mit den beiden baugleichen Druckbegrenzungsventilen 38 im geschlossenen Hydraulikkreislauf 36 steht an der Kuppeleinrichtung 33 drehrichtungsunabhängig das jeweilig eingestellte Drehmoment für den Einziehbetrieb und den Reversierbetrieb zur Verfügung.

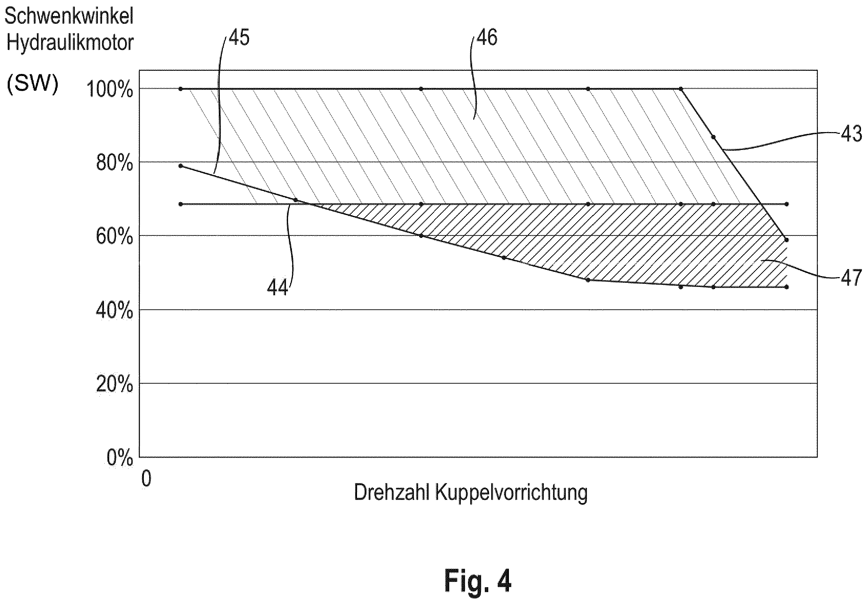

In Fig. 4 ist ein Schwenkwinkel-Drehzahldiagramm mit verschiedenen Drehmomentverläufen 43, 44, 45 für den Hydraulikmotor 30 und das Vorsatzgerät 4 dargestellt. Mit 43 ist ein Grenz-Drehmomentverlauf des Hydraulikmotors 30 bezeichnet, welcher dessen technische Obergrenze, das von dem Hydraulikmotor 30 maximal zur Verfügung stellbare Drehmoment, darstellt. Mit 44 ist ein Drehmomentverlauf des anzutreibenden Vorsatzgerätes 4 bezeichnet, das sich vorsatzgerätespezifisch aus dem maximal aufnehmbaren Drehmoment des Vorsatzgerätes 4 ergibt. Mit 45 ist ein Effizienz-Drehmomentverlauf des Hydraulikmotors 30 bezeichnet, welcher sich für verschiedene Lastpunkte des Vorsatzgerätes 4 einstellt, in welchen der Hydraulikmotor 30 effizient betreibbar ist.

Die Steuerungsvorrichtung 35 ist dazu eingerichtet, den Hydraulikmotor 30 in einem Effizienzmodus zu betreiben, wobei die Steuerungsvorrichtung 35 den im Effizienzmodus voreingestellten Schwenkwinkel SW des Hydraulikmotors 30 nach einem Lastkollektiv in Abhängigkeit von der Art des angebauten Vorsatzgerätes 4 und einer für das Vorsatzgerät 4 spezifischen Betriebsdrehzahl bestimmt. Im Effizienzmodus kann der Hydraulikmotor 30, in Abhängigkeit vom anzutreibenden Vorsatzgerät, in einem effizienten Betriebspunkt betrieben werden. Der effiziente Betriebspunkt kann anhand des Effizienz-Drehmomentverlaufs 45 des Hydraulikmotors 30 bestimmt werden.

Ein zwischen dem Grenz-Drehmomentverlauf 43 des Hydraulikmotors 30 und dem Drehmomentverlauf 44 des Vorsatzgerätes 4 durch Schraffur 46 gekennzeichneter Bereich definiert den Betriebsbereich des Hydraulikmotors 30, innerhalb dessen dieser aufgrund des Grenz-Drehmomentverlaufs 44 des anzutreibenden Vorsatzgerätes 4 nicht betreibbar ist. Die Einhaltung des Grenz-Drehmomentverlaufs 44 wird durch die Ansteuerung und Einstellung der beiden baugleichen Druckbegrenzungsventile 38 erreicht.

Ein zwischen dem Grenz-Drehmomentverlauf 44 des Vorsatzgerätes 4 und dem Effizienz-Drehmomentverlauf 45 des Hydraulikmotors 30 durch Schraffur 47 gekennzeichneter Bereich definiert einen zulässigen Betriebsbereich des Hydraulikmotors 30, in welchem durch eine Verstellung des Schwenkwinkels SW eine Übersteuerung des Effizienz-Drehmomentverlauf 45 mittels Ansteuerung durch die Steuerungsvorrichtung 35 zulässig ist.

Wie weiter oben bereits ausgeführt, ist die Steuerungsvorrichtung 35 dazu eingerichtet, den Hydraulikmotor 30 zur Einstellung des Schluckvolumens oder des Schwenkwinkels SW zur Begrenzung eines auf das Vorsatzgerät 4 zu übertragenden Drehmoments anzusteuern. Hierzu kann der einzustellende Schwenkwinkel SW anhand des für das jeweilige Vorsatzgerät 4 spezifischen Effizienz-Drehmomentverlaufs 45 bestimmt werden. Die Steuerungsvorrichtung 35 stellt den entsprechenden Steuerstrom ein, um den aus dem Effizienz-Drehmomentverlauf 45 abgeleiteten Schwenkwinkel SW für den Betrieb im Effizienzmodus einzustellen.

Die Steuerungsvorrichtung 35 ist somit dazu eingerichtet, den Hydraulikmotor 30 in Abhängigkeit von einem in der Steuerungsvorrichtung 35 hinterlegten vorsatzgerätespezifischen Parametersatz anzusteuern, so dass der Hydraulikmotor 30 im Effizienzmodus ein vorsatzgerätespezifisches Betriebsdrehmoment generiert, welches geringer als ein für das anzutreibende Vorsatzgerät 4 spezifisches Maximaldrehmoment ist. Das vorsatzgerätespezifische Maximaldrehmoment lässt sich von der Steuerungsvorrichtung 35 entsprechend aus dem Grenz-Drehmomentverlauf 44 des Vorsatzgerätes 4 zu bestimmen. Das vorsatzgerätespezifische Betriebsdrehmoment lässt sich von der Steuerungsvorrichtung 35 entsprechend aus dem Effizienz-Drehmomentverlauf 45 des Vorsatzgerätes 4 bestimmen.

Weiterhin ist die Steuerungsvorrichtung 35 dazu eingerichtet, beim Detektieren einer Lastspitze den Hydraulikmotor 30 anzusteuern, so dass der Hydraulikmotor 30 das generierte Betriebsdrehmoment bis zum Maximaldrehmoment erhöht. Hierdurch kann auf kurzfristig erhöhte Lastanforderungen des Vorsatzgerätes 4 reagiert werden. Dies kann dazu dienen, die Ansteuerung des Hydraulikmotors 30 an wechselnde Lastanforderungen anzupassen. So kann bei einer kurzfristig erhöhten Lastanforderung das Schluckvolumen des Hydraulikmotors 30 vergrößert werden, um das vom Hydraulikmotor 30 bereitgestellte Betriebsdrehmoment zu erhöhen. Hierzu kann die Steuerungsvorrichtung 35 den Hydraulikmotor 30 in einem Boost-Modus betreiben.

Zur Detektion vom Lastspitzen dient der in beiden Hydraulikleitungen jeweils der Hydraulikpumpe nachgeordnete Drucksensor, welche die von diesen generierten Messsignale an die Steuerungsvorrichtung zur Auswertung übertragen. In der Speichereinheit 41 sind vorsatzgerätespezifisch jeweils ein Minimalwert und ein Maximalwert für einen detektieren Lastdruck im Hydraulikkreislauf 36 hinterlegt. Der detektierte Lastdruck wird mit den jeweilig hinterlegten Minimalwerten und Maximalwerten durch die Recheneinheit 40 der Steuerungsvorrichtung 35 verglichen.

Die Steuerungsvorrichtung 35 ist dazu eingerichtet, beim Überschreiten des Maximalwertes für den detektierten Lastdruck ein von dem Hydraulikmotor 30 aufgenommenes Schluckvolumen durch Verstellung des Schwenkwinkels SW zu vergrößern. Die Verstellung des Schwenkwinkels SW erfolgt entsprechend bis zum Erreichen des Grenz-Drehmomentverlauf 44 des Vorsatzgerätes 4. Die Verstellung des Schwenkwinkels SW kann dabei bevorzugt stufenweise erfolgen. Denkbar ist auch eine stufenlose Verstellung des Schwenkwinkels SW.

Bei einem Unterschreiten des Minimalwertes steuert die Steuerungsvorrichtung 35 den Hydraulikmotor 30 an, um das von dem Hydraulikmotor 35 aufgenommene Schluckvolumen durch Verstellung des Schwenkwinkels SW auf einen Wert zu reduzieren, so dass der Hydraulikmotor 30 auf das eingestellte vorsatzgerätespezifische Betriebsdrehmoment, welches entsprechend dem für das Vorsatzgerät bestimmten Effizienz-Drehmomentverlauf 45 generiert wird.

Hierzu kann die Steuerungsvorrichtung 35 dazu eingerichtet sein, in Abhängigkeit von einer Mindestdauer der Überschreitung des Maximalwertes oder der Unterschreitung des Minimalwertes den Hydraulikmotor 30 zur Veränderung des aufgenommenen Schluckvolumens anzusteuern. Hierdurch lässt sich ein ungewolltes Aufschwingen des Systems durch vermeiden.

Dabei können in der Speichereinheit 41 vorsatzgerätespezifisch zumindest ein Minimalwert und zumindest ein Maximalwert für einen im Hydraulikkreislauf 36 detektieren Lastdruck hinterlegt sein. Der vorsatzgerätespezifische Minimalwert und der Maximalwert bilden einen Übergangsbereich, um zwischen den Betriebsarten Effizienzmodus und Boost-Modus zu wechseln.

Gemäß einem weiteren Aspekt ist die Steuerungsvorrichtung 35 dazu eingerichtet, zum Betreiben des Vorsatzgerätes 4 die vom Hydraulikmotor 30 angetriebene, als Schnellkuppeleinrichtung ausgeführte Kuppeleinrichtung 33, mit der das Vorsatzgerät 4 zum Antreiben trieblich verbunden ist, mit einer konstanten Drehzahl zu betreiben und die Drehzahl der Kuppelvorrichtung 33 durch eine von der Antriebsdrehzahl des Antriebsmotors 9 und der Vorfahrtgeschwindigkeit unabhängigen Ansteuerung der Hydraulikpumpe 30 des Vorsatzantriebs 29 im Wesentlichen konstant zu halten.

Während der Hydraulikmotor 30 mit dem voreingestellten Schwenkwinkel SW betrieben wird, wird die Drehzahl der Kuppeleinrichtung 33 durch die Ansteuerung der Hydraulikpumpe 34 bewirkt. Die Drehzahl der Kuppeleinrichtung 33 kann in den technischen Grenzen unabhängig von der Antriebsmotordrehzahl und der Vorfahrtgeschwindigkeit im Wesentlichen konstant gehalten werden. Wesentlich ist dabei, dass durch diese Ansteuerung einer Motordrückung des als Verbrennungsmotor ausgeführten Antriebsmotors 9 entgegengewirkt werden kann, um die Drehzahl der Kuppeleinrichtung 33 im Wesentlichen konstant zu halten. Dadurch kann der Betrieb von Vorsatzgeräten 4 mit angetriebenen Komponenten, die mit einer konstanten Drehzahl zu betreiben sind, gewährleistet werden.

Hierdurch lässt sich beispielsweise bei einem Direktschneidwerk durch eine im Wesentlichen konstant gehaltene Mähscheibendrehzahl das Schnittbild verbessern. Durch die elektrische Steuerung des Schwenkwinkels SW des Hydraulikmotors 30 wirkt die hydrostatische Übersetzung zwischen der Hydraulikpumpe 34 und dem Hydraulikmotor 30 der Motordrückung entgegen um die Drehzahl der Kuppeleinrichtung 33 im Wesentlichen konstant zu halten.

### Bezugszeichenliste

| | | | |
|---|---|---|---|
| 1 | Erntemaschine | 27 | Hauptantriebsstrang |
| 2 | Feldhäcksler | 28 | Antriebsstrang |
| 3 | Erntegutstrom | 29 | Vorsatzantrieb |
| 4 | Vorsatzgerät | 30 | Hydraulikmotor |
| 5 | Einzugsvorrichtung | 31 | Getriebe |
| 5a | Walze | 32 | Gelenkwelle |
| 5b | Walze | 33 | Kuppeleinrichtung |
| 5c | Einzugsgehäuse | 34 | Hydraulikpumpe |
| 6 | Häckselvorrichtung | 35 | Steuerungsvorrichtung |
| 6a | Messertrommel | 36 | Hydraulikreislauf |
| 6b | Messertrommelwelle | 37 | Hydraulikleitung |
| 7 | Konditioniereinrichtung | 38 | Druckbegrenzungsventil |
| 8 | Auswurfbeschleuniger | 39 | Drucksensor |
| 8a | Förderelement | 40 | Recheneinheit |
| 8b | Welle | 41 | Speichereinheit |
| 9 | Antriebsmotor | 42 | Bedien- und Anzeigeeinheit |
| 10 | Überladeeinrichtung | 43 | Grenz-Drehmomentverlauf von 30 |
| 11 | Verteilergetriebe | 44 | Drehmomentverlauf von 4 |
| 12 | Abtriebsriemenscheibe | 45 | Effizienz-Drehmomentverlauf |
| 13 | Kupplung | 46 | Schraffur |
| 14 | Hydraulikpumpe | 47 | Schraffur |
| 15 | Hauptantriebsriemen | | |
| 16 | Hauptriemenscheibe | FR | Fahrtrichtung |
| 17 | Riemenscheibe | SW | Schwenkwinkel von 30 |
| 18 | Spannvorrichtung | | |
| 19 | Spannrolle | | |
| 20 | Achse | | |
| 21 | Hydraulikzylinder | | |
| 22 | Hydraulikmotor | | |
| 23 | Getriebe | | |
| 24 | Gelenkwelle | | |
| 25 | Getriebe | | |
| 26 | Antriebssystems | | |

## Patentansprüche

1. Selbstfahrende Erntemaschine (1, 2), umfassend einen Vorsatzantrieb (29), welcher zumindest eine Hydraulikpumpe (34) aufweist, die zum Antreiben eines Hydraulikmotors (30) zum Antreiben eines an einer Einzugsvorrichtung (5) der Erntemaschine (1, 2) angeordneten Vorsatzgerätes (4) eingerichtet ist, **dadurch gekennzeichnet, dass** der Vorsatzantrieb (29) zum linksdrehenden und zum rechtsdrehenden Antreiben des Vorsatzgerätes (4) in einem Einziehbetrieb vorgesehen und eingerichtet ist, wobei die Erntemaschine (1, 2) eine Steuerungsvorrichtung (35) zur Ansteuerung des Vorsatzantriebes (29) umfasst, die dazu eingerichtet ist, die Drehrichtung des Vorsatzantriebes (29) durch eine invertierte Ansteuerung der Hydraulikpumpe (34) umzukehren, wobei die Hydraulikpumpe (34) und der Hydraulikmotor (30) in einem geschlossen ausgeführten Hydraulikkreislauf (30) angeordnet sind, wobei die Hydraulikpumpe (34) und der Hydraulikmotor (30) durch zwei Hydraulikleitungen (37) fluidleitend miteinander verbunden sind, und dass in beiden Hydraulikleitungen (37) jeweils ein Druckbegrenzungsventil (38) der Hydraulikpumpe (34) nachgeordnet ist, wobei die beiden Druckbegrenzungsventile (38) baugleich ausgeführt sind.

2. Selbstfahrende Erntemaschine (1, 2) nach Anspruch 1, **dadurch gekennzeichnet, dass** der Hydraulikmotor (30) eine als Schnellkuppeleinrichtung ausgeführte Kuppeleinrichtung (33) antreibt, mit der das Vorsatzgerät (4) zum Antreiben trieblich verbunden ist.

3. Selbstfahrende Erntemaschine (1, 2) nach Anspruch 2, **dadurch gekennzeichnet, dass** die Steuerungsvorrichtung (35) dazu eingerichtet ist, eine von der Kuppeleinrichtung (33) übertragene Drehzahl durch eine Ansteuerung der Hydraulikpumpe (34) einzustellen.

4. Selbstfahrende Erntemaschine (1, 2) nach einem der vorangehenden Ansprüche, **dadurch gekennzeichnet, dass** die Steuerungsvorrichtung (35) dazu eingerichtet ist, Schluckvolumen oder Schwenkwinkel (SW) des Hydraulikmotors (30) vorsatzgerätespezifisch einzustellen.

5. Selbstfahrende Erntemaschine (1, 2) nach Anspruch 4, **dadurch gekennzeichnet, dass** die Steuerungsvorrichtung (35) dazu eingerichtet ist, das Schluckvolumen oder den Schwenkwinkel (SW) des Hydraulikmotors (30) im Einziehbetrieb und im Reversierbetrieb jeweils vorsatzgerätespezifisch einzustellen.

6. Selbstfahrende Erntemaschine (1, 2) nach Anspruch 4 oder 5, **dadurch gekennzeichnet, dass** die Steuerungsvorrichtung (35) dazu eingerichtet ist, einen Steuerstrom zur Einstellung des Schwenkwinkels (SW) des Hydraulikmotors (30) einzustellen und zu überwachen.

7. Selbstfahrende Erntemaschine (1, 2) nach einem der Ansprüche 4 bis 6, **dadurch gekennzeichnet, dass** die Steuerungsvorrichtung (35) dazu eingerichtet ist, im Einziehbetrieb und im Reversierbetrieb für das Schluckvolumen oder den Schwenkwinkel (SW) gleiche Einstellwerte oder voneinander abweichende Einstellwerte vorzugeben und einzustellen.

8. Selbstfahrende Erntemaschine (1, 2) nach einem der Ansprüche 1 bis 7, **dadurch gekennzeichnet, dass** die Steuerungsvorrichtung (35) eine Recheneinheit (40), eine Speichereinheit (41) sowie eine Bedien- und Anzeigeeinheit (42) umfasst, wobei die Recheneinheit (40) dazu eingerichtet ist, in der Speichereinheit (41) hinterlegte Informationen zu verarbeiten, wobei die Bedien- und Anzeigeeinheit (42) zur Eingabe und/oder Auswahl eines an der Einzugsvorrichtung (5) angeordneten Vorsatzgerätemodells eingerichtet ist.

9. Selbstfahrende Erntemaschine (1, 2) nach Anspruch 8, **dadurch gekennzeichnet, dass** in der Speichereinheit (41) vorsatzgerätespezifische Parametersätze hinterlegt sind, die Maximalwerte für Drehmomente im Einziehbetrieb und im Reversierbetrieb der verschiedenen Vorsatzgerätemodelle beinhalten.

10. Selbstfahrende Erntemaschine (1, 2) nach Anspruch 9, **dadurch gekennzeichnet, dass** die Bedien- und Anzeigeeinheit (42) zur manuellen Eingabe von Maximalwerten für Drehmomente im Einziehbetrieb und im Reversierbetrieb eingerichtet ist.

11. Selbstfahrende Erntemaschine (1, 2) nach einem der vorangehenden Ansprüche, **dadurch gekennzeichnet, dass** die Hydraulikpumpe (34) als Verstellpumpe und der Hydraulikmotor (30) als Verstellmotor ausgeführt ist.

## Claims

1. Self-propelled harvesting machine (1, 2), comprising an attachment drive (29) which has at least one hydraulic pump (34) configured to drive a hydraulic motor (30) for driving an attachment (4) arranged on a feed apparatus (5) of the harvesting machine (1, 2), **characterized in that** the attachment drive (29) is provided and configured for the left-turning and for the right-turning driving of the attachment (4) in a feed mode, wherein the harvesting machine (1, 2) comprises a control apparatus (35) for controlling the attachment drive (29), which control apparatus is configured to reverse the direction of rotation of the attachment drive (29) by means of inverted control of the hydraulic pump (34), wherein the hydraulic pump (34) and the hydraulic motor (30) are arranged in a closed hydraulic circuit (30), wherein the hydraulic pump (34) and the hydraulic motor (30) are connected to each other in a fluid-conducting manner by means of two hydraulic lines (37), and **in that** a pressure limiting valve (38) is arranged downstream of the hydraulic pump (34) in each case in both hydraulic lines (37), wherein the two pressure limiting valves (38) are structurally identical.

2. Self-propelled harvesting machine (1, 2) according to Claim 1, **characterized in that** the hydraulic motor (30) drives a coupling device (33) which is in the form of a quick coupling device and to which the attachment (4) is connected for driving.

3. Self-propelled harvesting machine (1, 2) according to Claim 2, **characterized in that** the control apparatus (35) is configured to adjust a speed transmitted by the coupling device (33) by controlling the hydraulic pump (34).

4. Self-propelled harvesting machine (1, 2) according to one of the preceding claims, **characterized in that** the control apparatus (35) is configured to adjust the displacement or pivot angle (SW) of the hydraulic motor (30) in a manner specific to the attachment.

5. Self-propelled harvesting machine (1, 2) according to Claim 4, **characterized in that** the control apparatus (35) is configured to adjust the displacement or the pivot angle (SW) of the hydraulic motor (30) in the feed mode and in the reversing mode in each case in a manner specific to the attachment.

6. Self-propelled harvesting machine (1, 2) according to Claim 4 or 5, **characterized in that** the control apparatus (35) is configured to adjust and monitor a control current for adjusting the pivot angle (SW) of the hydraulic motor (30).

7. Self-propelled harvesting machine (1, 2) according to one of Claims 4 to 6, **characterized in that** the control apparatus (35) is configured to specify and set the same setting values or different setting values for the displacement or the pivot angle (SW) in the feed mode and in the reversing mode.

8. Self-propelled harvesting machine (1, 2) according to one of Claims 1 to 7, **characterized in that** the control apparatus (35) comprises a computing unit (40), a storage unit (41) and an operating and display unit (42), wherein the computing unit (40) is configured to process information stored in the storage unit (41), wherein the operating and display unit (42) is configured to input and/or select an attachment model arranged on the feed apparatus (5).

9. Self-propelled harvesting machine (1, 2) according to Claim 8, **characterized in that** attachment-specific parameter sets are stored in the storage unit (41) and contain maximum values for torques in the feed mode and in the reversing mode of the various attachment models.

10. Self-propelled harvesting machine (1, 2) according to Claim 9, **characterized in that** the operating and display unit (42) is configured to manually input maximum values for torques in the feed mode and in the reversing mode.

11. Self-propelled harvesting machine (1, 2) according to one of the preceding claims, **characterized in that** the hydraulic pump (34) is designed as a variable displacement pump and the hydraulic motor (30) is designed as a variable displacement motor.

## Revendications

1. Machine de récolte (1, 2) automotrice, comprenant un moyen d'entraînement d'outil frontal (29) qui présente au moins une pompe hydraulique (34) qui est agencée pour entraîner un moteur hydraulique (30) destiné à entraîner un outil frontal (4) installé sur un dispositif d'alimentation (5) de la machine de récolte (1, 2), **caractérisée en ce que** le moyen d'entraînement d'outil frontal (29) est prévu et agencé pour l'entraînement avec rotation à gauche et rotation à droite de l'outil frontal (4), dans un mode alimentation, la machine de récolte (1, 2) comportant un dispositif de commande (35) qui est destiné à activer le moyen d'entraînement d'outil frontal (29) et est conçu pour inverser le sens de rotation du moyen d'entraînement d'outil frontal (29), par une activation inversée de la pompe hydraulique (34), la pompe hydraulique (34) et le moteur hydraulique (30) étant installés dans un circuit hydraulique (30) réalisé sous une forme fermée, la pompe hydraulique (34) et le moteur hydraulique (30) étant reliés entre eux par deux conduites hydrauliques (37), de manière à conduire un fluide, et **en ce qu'**une soupape de limitation de pression (38) est placée respectivement dans les deux conduites hydrauliques (37), en aval de la pompe hydraulique (34), les deux soupapes de limitation de pression (38) étant de construction identique.

2. Machine de récolte (1, 2) automotrice selon la revendication 1, **caractérisée en ce que** le moteur hydraulique (30) entraîne un dispositif d'accouplement (33) réalisé sous forme de dispositif d'accouplement rapide, auquel l'outil frontal (4) est relié par une liaison motrice, en vue de l'entraînement.

3. Machine de récolte (1, 2) automotrice selon la revendication 2, **caractérisée en ce que** le dispositif de commande (35) est conçu pour régler une vitesse de rotation transmise par le dispositif d'accouplement (33), par le biais d'une activation de la pompe hydraulique (34).

4. Machine de récolte (1, 2) automotrice selon une des revendications précédentes, **caractérisée en ce que** le dispositif de commande (35) est conçu pour régler le volume d'absorption ou l'angle de pivotement (SW) du moteur hydraulique (30), de manière spécifique à l'outil frontal.

5. Machine de récolte (1, 2) automotrice selon la revendication 4, **caractérisée en ce que** le dispositif de commande (35) est conçu pour régler le volume d'absorption ou l'angle de pivotement (SW) du moteur hydraulique (30) de manière spécifique à l'outil frontal, respectivement en mode alimentation et en mode inversion.

6. Machine de récolte (1, 2) automotrice selon la revendication 4 ou 5, **caractérisée en ce que** le dispositif de commande (35) est conçu pour régler et surveiller un courant de commande pour le réglage de l'angle de pivotement (SW) du moteur hydraulique (30).

7. Machine de récolte (1, 2) automotrice selon une des revendications 4 à 6, **caractérisée en ce que** le dispositif de commande (35) est conçu pour prédéfinir et régler des valeurs de réglage identiques ou différentes pour le volume d'absorption ou l'angle de pivotement (SW), en mode alimentation et en mode inversion.

8. Machine de récolte (1, 2) automotrice selon une des revendications 1 à 7, **caractérisée en ce que** le dispositif de commande (35) comprend une unité de calcul (40), une unité de mémoire (41) ainsi qu'une unité de commande et d'affichage (42), l'unité de calcul (40) étant conçue pour traiter des informations enregistrées dans l'unité de mémoire (41), l'unité de commande et d'affichage (42) étant conçue pour la saisie et/ou la sélection d'un modèle d'outil frontal installé sur le dispositif d'alimentation (5).

9. Machine de récolte (1, 2) automotrice selon la revendication 8, **caractérisée en ce que** des ensembles de paramètres spécifiques à l'outil frontal sont enregistrés dans l'unité de mémoire (41), lesquels comportent des valeurs maximales pour des couples en mode alimentation et en mode inversion des différents modèles d'outils frontaux.

10. Machine de récolte (1, 2) automotrice selon la revendication 9, **caractérisée en ce que** l'unité de commande et d'affichage (42) est conçue pour une saisie manuelle de valeurs maximales pour des couples en mode alimentation et en mode inversion.

11. Machine de récolte (1, 2) automotrice selon une des revendications précédentes, **caractérisée en ce que** la pompe hydraulique (34) est réalisée comme pompe à cylindrée variable, et le moteur hydraulique (30) est réalisé comme moteur à cylindrée variable.
